Europäisches Patentamt

(19) European Patent Office  (11) Publication number: **0 291 107**
**B1**

Office européen des brevets

(12) **EUROPEAN PATENT SPECIFICATION**

(45) Date of publication of the patent specification:  (51) Int. Cl.⁵: **B60J 5/04**
22.08.90

(21) Application number: **88200727.1**

(22) Date of filing: **14.04.88**

㉞ Priority: **12.05.87 NL 8701127**

⑳ Proprietor: **Volvo Car B.V., Steenovenweg 1, NL-5708 HN Helmond(NL)**

㊸ Date of publication of application:
**17.11.88 Bulletin 88/46**

㉒ Inventor: **Houtzager, Kees, 4, Mercury, NL-5591 PA Heeze(NL)**

㊺ Publication of the grant of the patent:
**22.08.90 Bulletin 90/34**

㊽ Representative: **Timmers, Cornelis Herman Johannes et al, EXTERPATENT B.V. P.O. Box 90649, NL-2509 LP 's-Gravenhage(NL)**

㊽ Designated Contracting States:
**AT BE CH DE FR GB IT LI NL SE**

㊻ References cited:
**EP-A- 0 128 621**
**EP-A- 0 142 435**
**EP-A- 0 145 306**
**EP-A- 0 260 767**
**FR-A- 1 597 263**
**FR-A- 2 543 890**

(54) **Door-assembly.**

## Description

The invention relates to a door-assembly as described in the preamble of Claim 1.

A similar door-assembly is known from the German DE-A1-3209052 and 3217640. According to this state of the art the unit-carrier is constructed in a very special manner: the unit-carrier in fact constitutes the inner panel of the door. The implementation of the idea, as described in the above mentioned publications, therefore results in a construction which differs completely from the known door-constructions. This alternative construction indeed eliminates the disadvantage of poor accessibility of the door inner room with regard to automated component installation but is, due to the absence of a window guide, only suitable for cardesigns with doors without window frames (e.g. cabrio's).

The invention aims, starting from abovementioned state of the art, to provide a door-assembly which makes farreaching use of already, existing components, used in certain carstructures.

This objective is according to the invention attained with the measures as described in the characterizing clause of the main Claim.

The invention makes advantageously use of the reinforcement girders which are already present in the collision-proof doorconstructions to construct, in combination with the closure plate, a unit-carrier that can simply be installed in the door from the locking side thereof. It is not necessary to create another new construction and consequentially the costs of the door-assembly will hardly be higher than the same of the above mentioned assembly.

It is observed that FR-A-1 597 263 discloses a doorassembly, an inner panel of plastics, with an outer panel and in one piece formed by reaction molding, using a mold which contains a metal plate or rod to obtain the necessary hard plastics surface configuration at the inner surface of the door. This plate or rod can also be used as a kind of aggregate carrier because it can carry an armrest, the windowoperating mechanism and the hinges.

Preferred embodiments are described in the Claims 2 till 5 inclusive, while the method of assembly as described in Claim 6 can be incorporated without problems in the operations to be performed in an existing assembly-line.

The invention will be explained with reference to the drawing. Herein is:

Figure 1 a perspective view of the inner panel of a door-assembly according to the invention;
Figure 2 a perspective view of the outer and the inner panel of this assembly;
Figure 3 a perspective representation of the applied unit-carrier, without units however;
Figure 4 a perspective representation of this unit-carrier with various units;
Figure 5 a perspective representation as explanation for the method in which the unit-carrier is installed into the door-assembly.

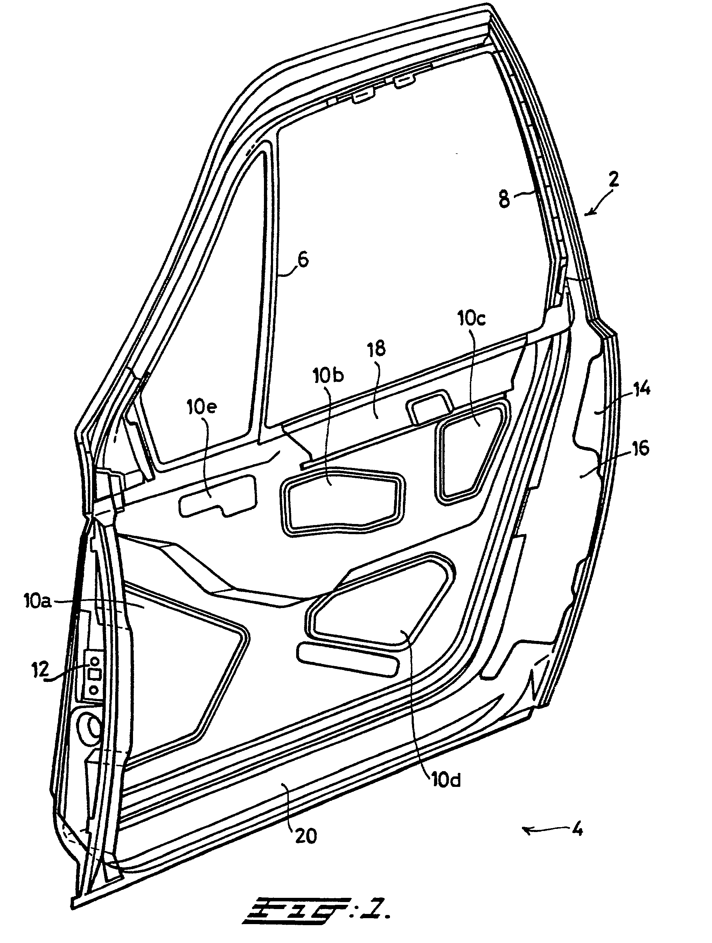

Figure 1 shows the inner panel of a leftside door-assembly, indicated in its entirety by the reference numeral 2 and as seen from the outside in the direction of the arrow 4. The panel has the usual windowguides 6, 8 while also the openings 10a-10e, as employed in the usual panels, are maintained although they are no more functional in the door-assembly according to the invention; their presence however results in a useful weight reduction. On the front side of the doorpanel 2 there is the usual hinge reinforcement 12, while the back rim 14 of the panel has a recess 16. Its purpose will be explained more fully later.

Furthermore there is the usual frieze section 18, while the bottom rim 20 of the panel also has been designed in the known and usual manner.

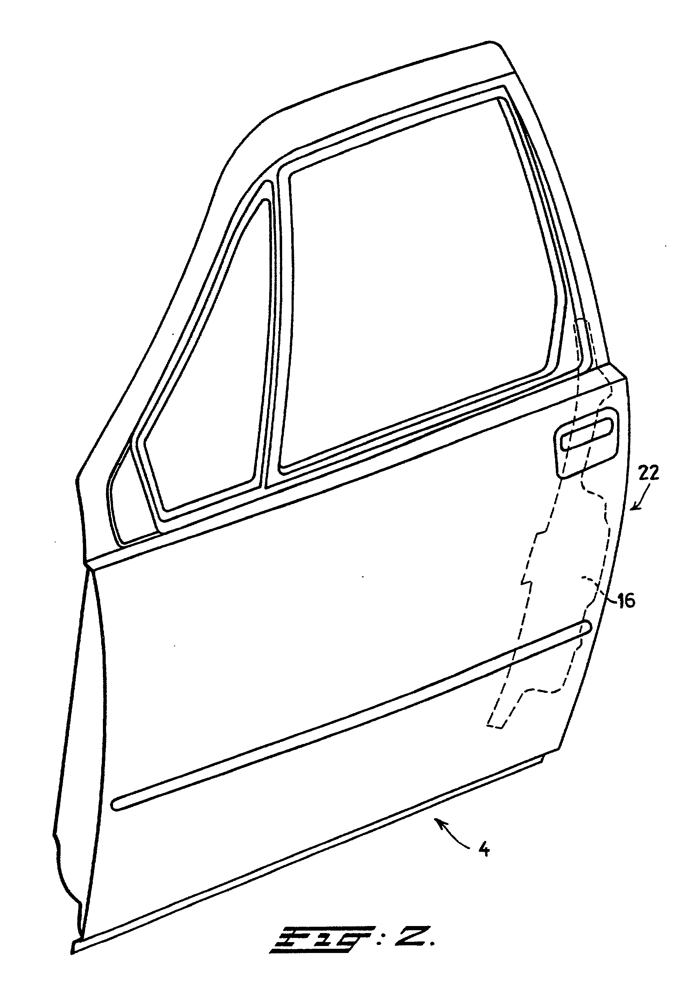

Figure 2 shows in general the outer panel of the door-assembly, indicated in its entirety by the reference numeral 22. This panel mainly has been designed in the usual way and forms together with the inner panel the external door-assembly without unit-carrier. recess 16 has been shown - with dashed lines - again.

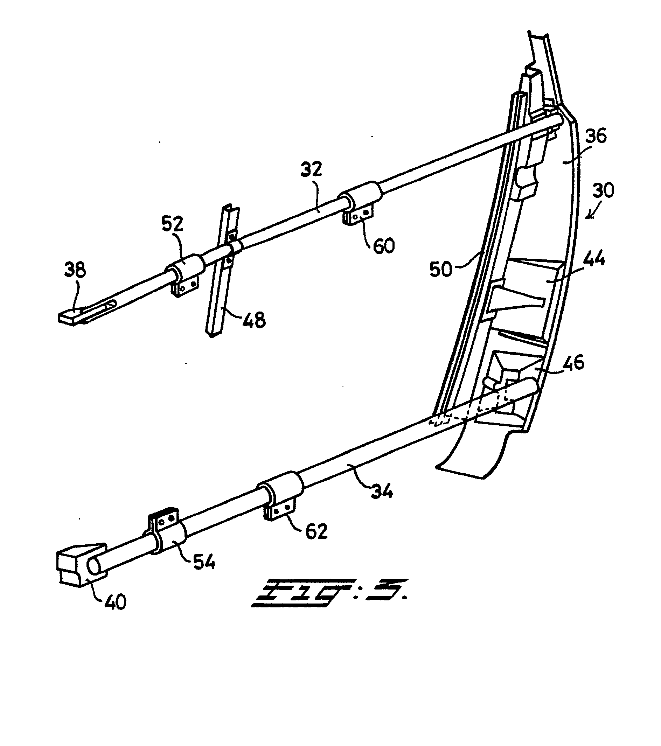

Figure 3 shows the unit-carrier according to the invention, indicated in its entirety with the reference numeral 30. This unit-carrier 30 consists of a number of, in this case two, reinforcement girders 32 and 34 and a closure plate 36, which is fitted between inner panel and outer panel at the final assembly of the door-assembly. The upper girder 32 and the lower girder 34 are ending at their front-end in an anchoring part 38 respectively 40 with which the girders are finally fastened to the hinge reinforcement plate 12 of the inner panel 2; on the back end no separate anchoring organs are necessary. The closure plate 36 carries a prefabricated mounting element 44 for the lock and a mounting element 46 for a lock actuating motor - used when a central door-locking system is employed. The upper girder 32 carries the front window guide 48 and between upper girder 32 and lower girder 34 the rear window guide 50 has been fitted.

Also on the lower and upper girder fixing organs 52, 60 and respectively 54, 62 have been fitted.

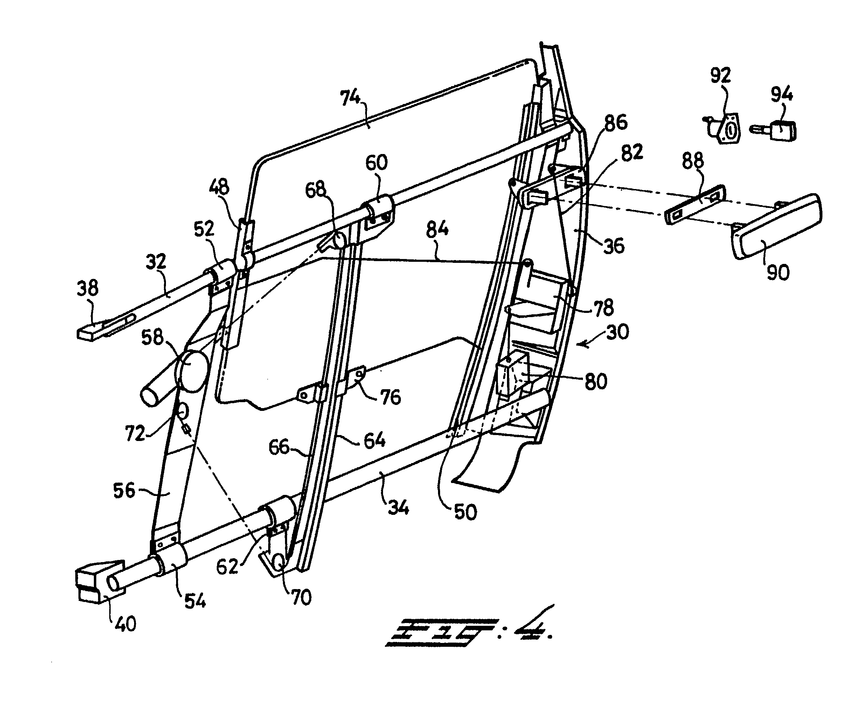

Figure 4 shows the unit-carrier in a later stage of assembly. Between the upper girder 32 and the lower girder 34, is, by way of the fixing organs 52 and 54, a support 56 for the window actuating motor 58 is mounted, while by means of the fixing organs 60 and 62 between the girders 32 and 34 is mounted a guide 64 for the window actuating cable 66 which passes over the guide rollers 68, 70 and 72 and which is driven by the motor 58. The window 74 is coupled to this cable 66 by way of a catcher 76 and is guided in the window guides 48 and 50. Figure 4 also shows how the closure plate 36 carries the lock 78 and the lockmotor 80 of the central door-locking system; schematically are shown the actuating rods 82 and 84 for respectively the locklatching and unlatching knobs to be operated from the inside and not shown in the drawing, and also mounted on the closure plate 36 is the inner part 86 of the outer handle cooperating with the later to be mounted intermediate plate 88 and handle 90, while also is indicated lock 92 with key 94 to be mounted afterwards from the outside.

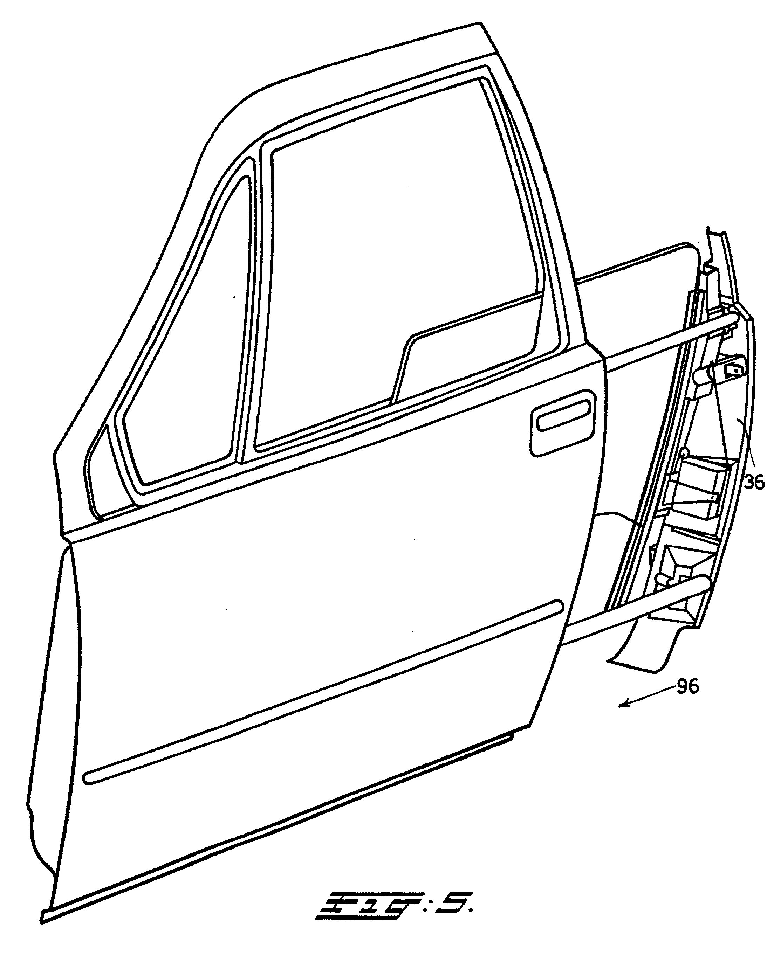

After attaching the inner panel and the outer panel to one another, which can be done in the usual manner by folded jointing or adhesive bonding, the completed unit-carrier is, as is shown in figure 5, inserted in the direction of the arrow 96 into the door-assembly and the closure plate 36 is sealingly fastened between inner panel and outer panel. By means of the anchorings 38 and 40 the upper girder 32 and lower girder 34 are attached to the hinge reinforcing plate 12.

The assembly and the mounting of the door-assembly can be carried out as follows:

Inner panel and outer panel are built up in the usual way from the various components, joined together by adhesive bonding and folded jointing and are subjected in combination to the heat treatment necessary for adhesive bonding. Separately from this the unit-carrier is built up to the configuration as shown in figure 3 and provisionally mounted in the door, constituted by the inner and outer panel which have been interconnected. The thus obtained entirety is mounted on the vehicle body and adjusted, and is subjected with the rest of the vehicle to the usual painting treatment in the painting line. Thereafter the door is taken out again - which is also necessary to provide accessibility to the interior of the vehicle for the various assembly operations - and the unit-carrier is completed with the components shown in figure 4. When this has been done the now completed unit-carrier is inserted into the door (figure 5), the closure plate 36 is connected with inner and outer panel and the anchoring organs 38 and 40 of the reinforcement girders 32 and 34 are fastened and the door is finished with upholstery, handles etcetera. When this has been effected the door is mounted in the usual manner in the vehicle.

## Claims

1. Door assembly for a vehicle, constructed from discrete parts, to wit an outer panel (22), a unit-carrier (30) provided with reinforcement girders (32, 34) and an inner panel (2), fixed to the outer panel (22), characterized in that the inner panel (2) constitutes with the outer panel (22) a self-supporting unit which is closed on the hingeside and open on the lockside and in that at least two reinforcement girders spaced above one another are connected on the one hand to a closure plate (36), located between outer and inner panel for closing said self-supporting unit, and are connected on the other hand after insertion from the lock (78) side to the hingeside (12) of the door-assembly, the unit-carrier (30) being formed by the combination of the reinforcement girders (32, 34) and the closure plate (36).

2. Door assembly according to Claim 1, characterized in that the vertical front (48) - as well as rear window-guide (50) of the door is connected to at least one of the reinforcement girders (32).

3. Door assembly according to Claims 1 or 2, characterized in that a support (56) for a drive motor (58) for a window operating mechanism is fitted between the reinforcement girders (32, 34).

4. Door assembly according to Claims 1-3, characterized in that the door-locking mechanism (78, 80) is fitted on the closure plate (36).

5. Door assembly according to Claim 4, characterized in that the lock-operating mechanism (82, 84, 86) is also fitted on the closure plate (36).

6. Method for assembling a door assembly according to Claims 1-5, characterized in that an outer doorpanel and an inner doorpanel are interconnected to form a self-supporting entirety, which is closed on the hinging side and open on the locking side;

a unit-carrier is formed, consisting of at least two reinforcement girders, spaced above one another, connected with a closure plate, orientated transversely thereto and unit mounting elements;

the unit-carrier is provisionally mounted in the door, the door is mounted in the vehicle body and thereupon the entirety is subjected to the usual painting treatment(s);

the unit-carrier is removed from the door and provided with the necessary units;

the unit-carrier is connected in the door the junctions between closure plate and door inner- and outerpanels are closed, the reinforcement girders area fastened on the hinging side and the door is finished;

the door is mounted in the vehicle body.

## Patentansprüche

1. Kraftfahrzeugtüreinheit, die aus einzelnen Teilen konstruiert ist, an der eine äußere Verkleidung (22), eine mit Verstärkungsholmen (32, 34) versehene Trägereinheit (30) und eine an der äußeren Verkleidung (22) befestigte innere Verkleidung befestigt sind, dadurch gekennzeichnet, daß die innere Verkleidung (2) mit der äußeren Verkleidung (22) eine selbsttragende Einheit bildet, die auf der Scharnierseite geschlossen und auf der Schloßseite offen ist, daß mindestens zwei Verstärkungsholme im Abstand übereinander einerseits mit einer Abdeckplatte (36), die zwischen der äußeren und inneren Verkleidung zum Verschließen der selbsttragenden Einheit angeordnet ist, verbunden sind und andererseits nach dem Einsetzen von der Seite des Schlosses (78) mit der Scharnierseite (12) der Türeinheit verbunden sind, und daß die Trägereinheit (30) mittels der Kombination der Verstärkungsholme (32, 34) und der Abdeckplatte (36) gebildet wird.

2. Türeinheit nach Anspruch 1, dadurch gekennzeichnet, daß die vertikale vordere (48) — als auch die hintere Fensterführung (50) der Tür mit mindestens einem der Verstärkungsholme (32) verbunden ist.

3. Türeinheit nach Anspruch 1 oder 2, dadurch gekennzeichnet, daß eine Lagerung (56) für einen Antriebsmotor (58) für einen Fensterbetätigungsmechanismus zwischen den Verstärkungsholmen (32, 34) eingepaßt ist.

4. Türeinheit nach Anspruch 1 bis 3, dadurch gekennzeichnet, daß der Türverriegelungsmechanismus (78, 80) an die Abdeckplatte (36) angepaßt ist.

5. Türeinheit nach Anspruch 4, dadurch gekennzeichnet, daß der Schloßbetätigungsmechanismus (82, 84, 86) ebenfalls an die Abdeckplatte (36) angepaßt ist.

6. Verfahren zur Montage einer Türeinheit gemäß den Ansprüchen 1 bis 5, dadurch gekennzeichnet, daß eine äußere Türverkleidung und eine innere Türverkleidung miteinander verbunden werden, um eine selbsttragende Gesamtheit zu bilden, die an der Scharnierseite geschlossen und an der Schloßseite offen ist;

daß eine Trägereinheit gebildet wird, bestehend aus mindestens zwei im Abstand übereinander angeordneten Verstärkungsholmen, die mit einer Abdeckplatte verbunden sind, die quer dazu ausgerichtet ist und Befestigungselemente für die Einheit aufweist;

daß die Trägereinheit provisorisch in der Tür befestigt wird, die Tür am Fahrzeugkörper befestigt wird und darauf die Gesamtheit der üblichen Lackierung(en) unterworfen wird;

daß die Trägereinheit von der Tür entfernt wird und mit den notwendigen Einheiten versehen wird;

und daß die Trägereinheit in der Tür verbunden wird, wobei die Verbindungen zwischen der Abdeckplatte und den Türinnen- und Außenverkleidungen verschlossen werden, die Verstärkungsholme an der Scharnierseite befestigt werden und die Tür fertiggestellt wird; und daß die Tür am Fahrzeugkörper befestigt wird.

## Revendications

1. Ensemble formant portière pour véhicule, construit à partir de pièces distinctes, à savoir un panneau extérieur (22), un support d'éléments (30) pourvu de poutrelles de renforcement (32, 34) et un panneau intérieur (2) fixé au panneau extérieur (22), caractérisé en ce que le panneau intérieur (2) forme avec le panneau extérieur (22) une unité indépendante qui est fermée côté charnière et ouverte côté serrure, et en ce qu'au moins deux poutrelles de renforcement disposées l'une au-dessus de l'autre en étant espacées l'une de l'autre, sont reliées d'une part à une plaque de fermeture (36), placée entre les panneaux extérieur et intérieur pour fermer ladite unité indépendante, et d'autre part, après insertion depuis le côté serrure (78), au côté charnière (12) de l'ensemble formant portière, le support d'éléments (30) étant formé par la combinaison des poutrelles de renforcement (32, 34) et de la plaque de fermeture (36).

2. Ensemble formant portière selon la revendication 1, caractérisé en ce que les guide-vitres verticaux avant (48) et arrière (50) de la portière sont reliés à au moins l'une des poutrelles de renforcement (32).

3. Ensemble formant portière selon la revendication 1 ou 2, caractérisé en ce qu'un support (56) pour un moteur d'entraînement (58) destiné à un mécanisme d'actionnement de la vitre est installé entre les poutrelles de renforcement (32, 34).

4. Ensemble formant portière selon les revendications 1 à 3, caractérisé en ce que le mécanisme de verrouillage de portière (78, 80) est installé sur la plaque de fermeture (36).

5. Ensemble formant portière selon la revendication 4, caractérisé en ce que le mécanisme d'actionnement de verrouillage (82, 84, 86) est aussi installé sur la plaque de fermeture (36).

6. Méthode pour assembler un ensemble formant portière selon les revendications 1 à 5, caractérisée en ce que

un panneau de portière extérieur et un panneau de portière intérieur sont reliés entre eux pour former une unité indépendante qui est fermée du côté charnière et ouverte du côté serrure;

un support d'éléments est formé à partir d'au moins deux poutrelles de renforcement placées à distance l'une au-dessus de l'autre, reliées à une plaque de fermeture et orientées transversalement à celle-ci, et de pièces de montage des éléments;

le support d'éléments est monté provisoirement dans la portière, celle-ci est montée sur la carrosserie du véhicule, après quoi le tout est soumis au(x) traitement(s) de peinture habituel(s);

le support d'éléments est démonté de la portière et équipé des éléments nécessaires;

le support d'éléments est relié à la portière, les joints entre la plaque de fermeture et les panneaux intérieur et extérieur de portière sont fermés, les poutrelles de renforcement sont fixées sur le côté charnière et la finition de la portière est réalisée;

la portière est montée sur la carrosserie.

FIG:1.

Fig. 2.

_Fig: 3._

Fig. 5

36

96

FIG:5.